# EUROPEAN PATENT APPLICATION

(11) **EP 1 174 804 A2**
(43) Date of publication of application: **23.01.2002**
(21) Application number: 01117580.9
(22) Date of filing: 20.07.2001
(51) Int. Cl.: G06F 17/30

(54) **Method for searching multimedia using progressive histogram**

(30) Priority: 21.07.2000 KR 2000041811; 25.11.2000 KR 2000070690
(71) Applicant: LG ELECTRONICS INC., Seoul (KR)
(72) Inventor: Lee, Jin Soo, Songpa-ku, Seoul (KR); Kim, Heon Jun, Sungnam-si, Kyounggi-do (KR); Song, Jung Min, Seocho-ku, Seoul (KR)
(74) Representative: Bohnenberger, Johannes, Dr.

(57) **Abstract**

The present invention relates to a method for retrieving multimedia using a histogram. The present invention configures a histogram that a relatively important bin comes at the lead of the access when accessing histogram data for retrieving the multimedia and retrieves multimedia data by using the progressive histogram. According to the present invention, there are several advantages that a high retrieval capacity can be guaranteed even though only front part in the order of transfer of the histogram is used and the efficiency and capacity of retrieval can be enhanced by using a progressive histogram optimized according to the feature at every multimedia.

## Description

### BACKGROUND OF THE INVENTION

### 1. Field of the Invention

The present invention relates to a method for searching multimedia using a histogram.

### 2. Description of the Related Art

Recently, as content-based multimedia query techniques are coming to the front, the study of multimedia features affecting a query performance is being made actively. Most frequently used search engines at present use global and local color information and texture information for image retrieval. Among them, the color information is known as an element mostly affecting the image retrieval. Thus, the development of more effective color features is being made, and also an attempt to develop color spaces more effective to the retrieval is being made.

A histogram is most widely used as color information. The histogram is information representative of color variance of multimedia data such as images. A bin number of the histogram is determined according to how the color space is quantized. Generally, in case of quantizing a color space more finely and representing it by many color bins, though retrieval performance is increased, the size of the histogram is increased, which leads to a long retrieval time. In particular, in case of retrieval via a network, the size of the histogram can be an important factor according to the capacity of the network. In addition, in the case that the transfer of the histogram of data to be retrieved is interrupted at a particular portion. Moreover, there is a need to execute approximate retrieval without using the entire histogram according to the system performance of a client or the purpose of retrieval as well as a network environment. However, in the prior art, since the entire histogram for query images and retrievable images was comparatively retrieved, such a need could not be satisfied. Furthermore, in the case that system performance is low, comparative retrieval of the entire histogram makes a retrieval speed lower, while, in the case that such a need is satisfied only by approximate retrieval, unnecessary retrieval time is consumed.

### SUMMARY OF THE INVENTION

The present invention relates to a multimedia retrieval using a histogram, and discloses a histogram information structure assuring a high retrieval performance by using only the front parts of the histogram by positioning relatively important information at the front side of the histogram in the order of access in time series, and a multimedia retrieval method using this histogram.

It is, therefore, an object of the present invention to achieve a high retrieval performance even if query images and target images are comparatively retrieved only by parts of the histogram.

To achieve the above object, there is provided a histogram and a multimedia retrieval method according to the present invention, which has a histogram structure reconfigured in the order of importance of bins so that more important bins are positioned relatively at the front of the histogram in the order of access in time series and which enables retrieval using only progressive parts of the front part of a histogram bit stream.

In addition, there is provided a histogram and a multimedia retrieval method according to the present invention, which enables a high retrieval performance even if only parts of the histogram are used by including important bin order information of the histogram in the information representing the histogram and using histogram feature information containing these bin order information.

In addition, there is provided a method for retrieving multimedia by configuring a progressive histogram optimized according to the features of each multimedia object and using the same.

In addition, there is provided a method for retrieving multimedia by configuring a progressive histogram reordered in the order of importance in consideration of the features of multimedia and using the progressive histogram reordered in the order of importance and optimized according to the features of multimedia.

In addition, there is provided a method for configuring a progressive color histogram optimized according to the features of each multimedia and a multimedia retrieval method using the same which ensures a high retrieval performance by using only the front parts of the histogram in the order of transfer of the histogram during the transfer of the color histogram when the histogram is used as feature information for multimedia object retrieval.

### BRIEF DESCRIPTION OF THE DRAWINGS

The above objects, features and advantages of the present invention will become more apparent from the following detailed description when taken in conjunction with the accompanying drawings, in which:
Fig. 1 is a view illustrating a histogram bin transfer stream for explaining the present invention;
Fig. 2 is a flow chart explaining a method for reconfiguring a histogram in accordance with a first embodiment of the present invention;
Fig. 3 is a flow chart explaining a method for reconfiguring a histogram in accordance with a second embodiment of the present invention;
Fig. 4 is a view illustrating a HMMD color space as one example of a color space to which the present invention is adapted;
Fig. 5 is a view explaining a 184 level quantization method viewed in a HMMD cross-section;
Fig. 6 is a view illustrating an example of reorder information of a histogram consisting of 184 bins according to the present invention;
Fig. 7 is a view illustrating an example of performance comparison when partial comparative comparison is executed according to the present invention;
Fig. 8 is a flow chart illustrating a method for obtaining reorder information of a histogram in accordance with a third embodiment of the present invention;
Fig. 9 is a flow chart illustrating a method for obtaining reorder information of a histogram in accordance with a fourth embodiment of the present invention; and
Fig. 10 is a view illustrating a feature information structure of a multimedia object formed of histogram and reorder information.

### DETAILED DESCRIPTION OF THE PREFERRED EMBODIMENT

The following detailed description of the preferred embodiments utilizes the color histogram only as an example for the purpose of illustrating the method for searching multimedia data using the histogram in accordance with the present invention. The present invention is equally effective when applied to other types of histogram.

In the present invention, comparative comparison using only parts of a histogram enables a high retrieval performance. Such a function is very useful for the following two uses.

Particularly, as described above, in the case that transfer of histogram bit stream is interrupted by causes such as a network environment during the transfer of a histogram of data, retrieval using only transferred parts of the histogram information ensures a high retrieval performance. For this purpose, even though retrieval is executed in the order of transfer of bins of the histogram, i.e., only by using N (N < number of bins of the entire histogram) bins by priority, a high retrieval performance is to be ensured. As a second use, a server having data is determined to transfer either parts or all of the histogram according to the use of retrieval, the environment of a client and the environment of a network, and thus optimized retrieval can be executed for each case. For example, in the case that the retrieval is for use in data rctrieval of an approximately similar kind, or in the case that the network environment is very poor, retrieval can be executed without overworking the network environment while ensuring a minimum retrieval performance by transferring only parts of the histogram of data to be retrieved. On the contrary, in the case that the network or computer environment is very excellent and a very accurate retrieval is desired, the entire histogram can be transferred.

In order to provide the above useful function, it is necessary to optimize the histogram so that the retrieval performance is less lowered even when N bins of the histogram are retrieved by priority. For this purpose, the histogram has to be reconfigured in the structure in which important bins, i.e., bins more affecting retrieval, are positioned at the front of a bit stream. In this way, the histogram can be optimized according to the purpose of the present invention by reordering of bins.

A progressive histogram is multimedia feature information, for example, indicative of reordering bins of the color histogram in the order of importance and transferring the reordered histogram in the order of importance. By the progressive histogram, retrieval can be executed only by transferred parts even in the case that the transfer of the histogram of data is interrupted. In addition, a high retrieval performance can be ensured only by using these parts of the histogram. The reason of which is that a certain degree of multimedia object retrieval is made possible by using these parts of bins since bins transferred earlier are more important bins.

In the present invention, methods for deciding important bins include the following two methods.

The first method is one for statically calculating the discrimination ability of cach bin for discriminating data based on a sample group of data and considering a bin having larger discrimination ability as a more important bin. With respect to the decision of the discrimination ability, the variance of values for each bin in the sample group is calculated and thus it is considered that a bin having a larger variance indicates a more important bin. If data contained in the sample group are classified into groups by similarity, it can be considered that, as bins have a smaller variance in the same group but have a larger variance between data in other groups, they are more important bins. Theoretically, the importance of bins can be extracted more accurately by the latter method. However, it is not easy to classify the sample group into groups, and thus the former method is employed. It is verified that this method also shows a very excellent performance by an experiment.

The second method is one for considering the importance of a bin by considering the features of a color space without using a sample group. Generally, in the case that a color is quantized by M sections in a color space, the importance of each quantized color can be found roughly by preliminary knowledge according to chromaticity, fineness and brightness. Generally, a region with a lower fineness has a more important effect upon retrieval as compared to an area with a higher fineness. Therefore, if a color apace is divided based on its fineness, the importance of divided segments is larger than the segment with a lower fineness. Hence, as bins belong to an area with a lower fineness, they are more important. Accordingly, in the reordering of bins of a histogram, bins corresponding to areas of a lower fineness are positioned at the front side. For example, it is assumed that there exist two areas S1 and S2 mainly according to fineness. Assuming that S1 is a fineness area lower than S2 and the ratio of importance of S1 to S2 is 2:1, when segments to be positioned at the front side are selected in priority in order to decide the bin order of the histogram, the bin order can be decided in such a manner that two one S2 is selected when S1s are selected.

Based on the above-described concept, the features of the present invention will now be described.

According to the first feature of the present invention, in multimedia retrieval using a histogram, there is provided a progressive histogram which is reconfigured in the order of importance of bins so that retrieval using only progressive parts at the front side is made possible based on the order of access of the histogram, and a progressive multimedia retrieval method for performing retrieval using only parts of the histogram according to the use and environment of retrieval.

According to the second feature of the present invention, the reconfiguration of the histogram in the order of importance of bins described in the first feature is considered that bins having a larger variance are more important bin by means of calculation based on the variance of bin values for each bin calculated from a sample group.

According to the third feature of the present invention, the reconfiguration of the histogram in the order of importance of bins described in the first feature is considered that bins having a smaller variance in its group but having a larger variance between other groups are more important bin by means of calculation of the variance of each bin in its group and the variance of each bin between other groups from the sample group which is classified into groups by similarity of images.

According to the fourth feature of the present invention, the reconfiguration of the histogram in the order of importance of bins described in the first feature is configured by sampling bins meaning the segmental regions segmented by quantization of a color space in which a segmental region having a low fineness is selected with high probability and appeared in the front part of the histogram.

According to the fifth feature of the present invention, when the color histogram described in the fourth feature uses a color space of HMMD configured by Hue, SUM(MAX(RGB)+MIN(RGB)), DIFF(MAX(RGB)-MIN(RGB)) and the HMMD color space has the range of DIFF values of 0-255 and the designated DIFF values for segmenting on the basis of the shaft of DIFF are 9,29,75,200 and the five segmental regions segmented on the basis of the DIFF values are S1,S2,S3,S4 and S5,respectively, the five segmental regions are configured as 184 bins by using a color quantization method in which S1 is segmented by 8 on the basis of SUM, S2 is segmented by 4 on the basis of SUM and by 8 on the basis of Hue, S3 is segmented by 4 on the basis of SUM and by 12 on the basis of Hue, S4 is segmented by 4 on the basis of SUM and by 12 on the basis of Hue, and S5 is segmented by 2 on the basis of SUM and by 24 on the basis of Hue.

According to the sixth feature of the present invention, the sampling probabilities at the regions of S1,S2,S3,S4 and S5, respectively, described in the fourth feature are decided on 24:12:6:2:1 in order to make the sampling probabilities differ.

According to the seventh feature of the present invention, in the multimedia retrieval system using the progressive histogram described in the first feature, the method further comprises the step of: transferring the histogram to a client or retrieving the histogram by using the histogram in part or whole from the front part of the histogram according to a retrieval object and a hardware environment of the client for the retrieval.

According to the eighth feature of the present invention, in the multimedia retrieval system using the progressive histogram described in the first feature, the method further comprises retrieving by only using the received histogram data, when the histogram data of the query data is interrupted by unexpected results in transfer.

According to the ninth feature of the present invention, in the multimedia retrieval using a histogram, the multimedia retrieval method using a progressive histogram includes an important bin order information in a retrieving engine capable of retrieving by using a progressive part which comes at the lead on the basis of the transfer order of histogram (bit stream), retrieves by using the partial bin of the histogram and the bin order information, selects and uses a bin according to the order of importance of bins.

According to the tenth feature of the present invention, the configuration of the histogram in the order of importance of bins described in the ninth feature is considered that bins having a larger variance are more important bin by means of calculation based on the variance of bin values for each bin calculated from a sample group.

According to the eleventh feature of the present invention, the configuration of the histogram in the order of importance of bins described in the ninth feature is considered that bins having a smaller variance in its group but having a larger variance between other groups are more important bins by means of calculation of the variance of each bin in its group and the variance of each bin between other groups from the sample group which is classified into groups by similarity of images.

According to the twelfth feature of the present invention, the configuration of the histogram in the order of importance of bins described in the ninth feature is configured by sampling bins meaning the segmental regions segmented by quantization of a color space in which a segmental region having a low fineness is selected with high probability and appeared in the front part of the histogram.

According to the thirteenth feature of the present invention, when the histogram described in the twelfth feature uses a color space of HMMD configured by Hue, SUM(MAX(RGB)+MIN(RGB)), DIFF(MAX(RGB)-MIN(RGB)) and the HMMD color space has the range of DIFF values of 0∼255 and the designated DIFF values for segmenting on the basis of the shaft of DIFF are 9,29,75,200 and the five segmental regions segmented on the basis of the DIFF values are S1,S2,S3,S4 and S5,respectively, the five segmental regions are configured as 184 bins by using a color quantization method in which S1 is segmented by 8 on the basis of SUM, S2 is segmented by 4 on the basis of SUM and by 8 on the basis of Hue, S3 is segmented by 4 on the basis of SUM and by 12 on the basis of Hue, S4 is segmented by 4 on the basis of SUM and by 12 on the basis of Hue, and S5 is segmented by 2 on the basis of SUM and by 24 on the basis of Hue.

According to the fourteenth feature of the present invention, the sampling probabilities at the regions of S1,S2,S3,S4 and S5, respectively, described in the twelfth feature are decided on 24:12:6:2:1 in order to make the sampling probabilities differ.

According to the fifteenth feature of the present invention, in the multimedia retrieval system using the progressive histogram described in the ninth feature, the method further comprises transferring the histogram to a client or retrieving the histogram by using the histogram in part or whole from the front part of the histogram according to a retrieval object and a hardware environment of the client for the retrieval.

According to the sixteenth feature of the present invention, in the multimedia retrieval system using the progressive histogram described in the ninth feature, the method further comprises the steps of reconfiguring a query histogram and a retrieval target histogram according to the respective bin order information; and comparing/retrieving the histogram reconfigured that an important bin comes at the lead according to the bin order information.

According to the seventeenth feature of the present invention, in the multimedia retrieval system using the progressive histogram described in the ninth feature, the method further comprises the steps of: selecting a query histogram and a retrieval target histogram one by one according to the bin order information; and comparing/retrieving the histogram according to the bin order.

According to the eighteenth feature of the present invention, the multimedia retrieval is performed by using a progressive histogram optimized according to intrinsic feature of the corresponding object at every multimedia data and the optimization means that the importance configuring the corresponding histogram is differ according to the viewpoints of comparing/retrieving.

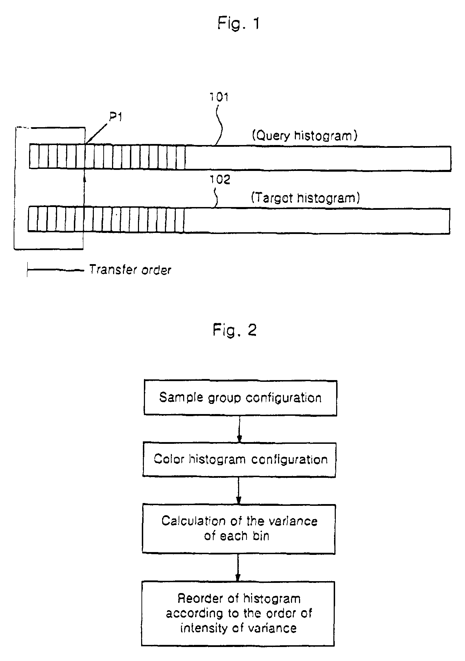

Fig. 1 illustrates one example of the application of the present invention. It is assumed that, in image retrieval using query images in a network environment, the transfer of a histogram 101 corresponding to the query images is interrupted before the entire histogram arrives, and thus the histogram is received up to P1. A client calculates similarity by using the histogram received up to P1 and using only bins at the same position as the histogram 102 of a target image. In this way, even if only parts of the histogram are used, a certain degree of retrieval performance is ensured, for thereby enabling a more effective retrieval.

Fig. 2 illustrates a method for reconfiguring bins of a histogram generated by a general method in the order of importance so that retrieval performance is not lowered drastically even if only parts of the histogram are used. Firstly, a sample group of various data is configured, and then a color histogram of data corresponding to the configured sample group is generated. Then, the variance of each bin of the generated color histogram is calculated and thereafter the histogram is reordered in the order of intensity of variance.

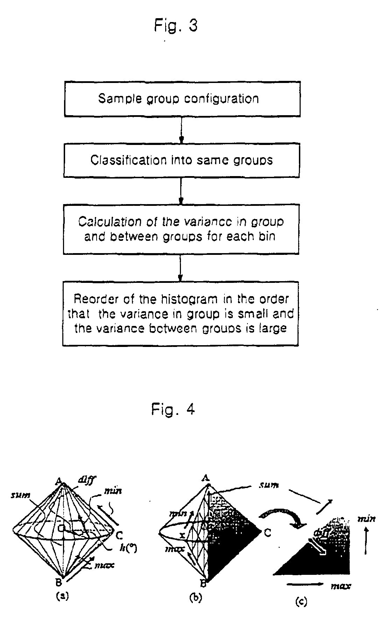

Fig. 3 illustrates another example of reordering bins of a histogram generated by a general method in the order of importance. Firstly, a sample group of various data is configured and then is classified into groups by using preliminary information on data of a similar type. The color histogram of data corresponding to the configured sample group is generated, and then the variance in group for histograms of data in the same group and the variance between groups for histograms of data in different groups are calculated. At this time, the histogram is reordered in the order that the variance in group is small and the variance between groups is large.

Fig. 4 illustrates a HMMD color space for explaining a progressive color histogram using the HMMD color space according to an embodiment of the present invention. The HMMD color space is a color space of a double cone shape. The central axis thereof is represented as SUM ([MAX(RGB) + MIN(RGB)]/2), which corresponds to brightness. Fineness is increased in the order of center to peripheral sides of the cone, which is represented as DIFF(MAX(RGB)-MIN(RGB)). The angle of the cone indicates a color, which is generally represented as Hue.

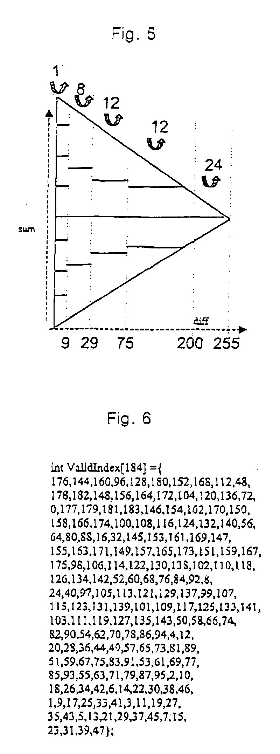

Fig. 5 illustrates an example of quantization of the HMMD color space explained in Fig. 4 by 184 levels. As illustrated therein, the HMMD color space is divided into 5 partial areas based on DIFF and then is subdivided into 184 segments. These segments generate a color histogram formed of 184 bins.

Fig. 6 illustrates reorder information generated when the 184 level color histogram described in Fig. 5 is divided into 5 partial areas based on DIFF and then the color histogram is reordered by sampling bins in each partial area in the probability ratio of 24:12:6:2:1. The sampling of bins means reordering of the color histogram in the order of selection of 184 bins with a particular probability. Thus, the bin firstly selected by sampling must be the most important bin. Therefore, if a bin has a high probability, it has a high sampling probability by priority and thus it is more likely to be positioned at the front in reordering. For example, two partial areas having the lowest fineness arc consists of 8 segments and 32 segments respectively as shown in Fig. 5. In the embodiment of the present invention, the probability ratio is 24:12. Thus, one bin is sampled from 2 bins in the first area, and then one bin is sampled from four bins in the next area, for thereby sampling four bins in the first area and 8 bins in the next area.

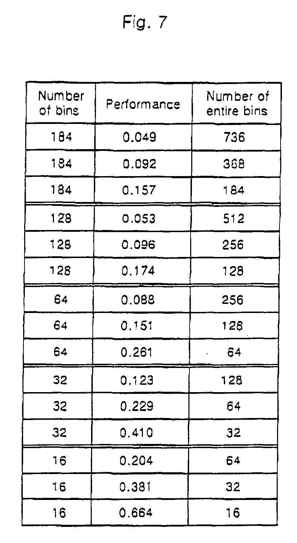

Fig. 7 illustrates changes in performance when using 16 bins, 32 bins, 64 bins and 128 bins in a progressive color histogram according to the present invention. At this time, when N bins are used, a bin value is not represented by a decimal, but is quantized and represented by n bits for spatial efficiency. For example, the representation of a bin value by 1 bit indicates the representation of a decimal between 0 and 1 by 0 or 1 based on a particular threshold. Thus, in the case that a bin value is represented by 1 bit and the histogram consists of 16 bins, the total number of bits of the histogram information used in retrieval is 16. In this experiment, retrieval performance is obtained by representing a bin value by 1 bit, 2 bits and 4 bits for each selected number of bins. In Fig. 7, a first string is indicative of a selected number of bins, a third string is indicative of how many bits of the histogram information are used by representing the bin value by n bits (that is, it is indicated that the bin value is also quantized), and a middle string is indicative of performance. The same number of bins is represented by 4 bits, 2 bits and 1 bit, respectively. For example, bin number 184 is represented by 4 bits (total number of bits 736), by 2 bits(total number of bits 368) and by 1 bit(total number of 184). Tn the middle string, the smaller the number of bits is, the more excellent the performance indicated by the middle string is. As illustrated in the drawing, the representation of a bin value by only 4 bits is adequate for achieving a high performance. The smaller the number of bins used for retrieval in the entire color histogram is, the lower the performance is. However, the width of the drop is not so large.

As described above, a method for reordering bins of the histogram in the order of importance can be obtained by statically analyzing the histogram of large quantity of multimedia data. However, there are so many various multimedia data, and thus even if a bin is so important in a particular multimedia group, it may be less important in another multimedia group. Thus, it is possible to achieve a higher retrieval performance by using a histogram optimized for each multimedia data and configured in a different bin order based on the features of each multimedia data.

For reordering of bins, a statistical method may be used for common application regardless of the type of multimedia. However, in this case, the respective characteristic features of each multimedia cannot be reflected, and thus there is a certain limitation in the performance. Therefore, in order to generate more optimized progressive histogram, it is necessary to generate and use a different progressive histogram conforming to the features of each multimedia object, for thereby achieving a retrieval optimized for each multimedia object. Here, the different progressive histogram conforming to the features is indicative of a histogram reordered in the order of importance in consideration of the features of each multimedia. That is, it is a histogram reordered according to the features of multimedia. Thus, in this case, the order of bins configuring the histogram is varied dependant upon each multimedia object. In order to configure such an optimized progressive histogram, firstly, it is necessary to calculate the importance of each bin for comparative comparison of each multimedia object. In this way, the importance of bins of each multimedia can be calculated by using a user feedback or using group information if those bins have bin grouped.

Firstly, a method using a user feedback will be explained. The user feedback means that a user informs a system of information about similar objects and dissimilar objects based on the result of retrieval as a feedback when retrieving a similar object upon a query of a corresponding object. For example, in case of image retrieval, the user informs the system of what images similar to the images that he or she seeks and what images dissimilar to the images that he or she seeks are based on the result of initial retrieval (user feedback). The system thusly having received the user feedback can calculate the importance of each bin of the histogram of the corresponding object by using feedback information about similarity and dissimilarity.

The method for calculating the importance wᵢ of bin i is as follows.${\text{w}}_{\text{i}} {\text{= af}}_{\text{l}} {\text{(i) + bf}}_{\text{R}} \text{(i)}$

Here, a and b are constants, fI(i) = (pmi)/qvi (similarity between similar images for bin i), fR(i) = pmi x qvi (dissimilarity between dissimilar images for bin i), p and q are constants, mi is the average of bin i values in the corresponding image group, vi is the variance of bin i values in the corresponding image group. With respect to the above-described importance wi of bin I, in the case that feedback images are only similar images or only dissimilar images, the importance of each element can be calculated by setting one of a and b as 0.

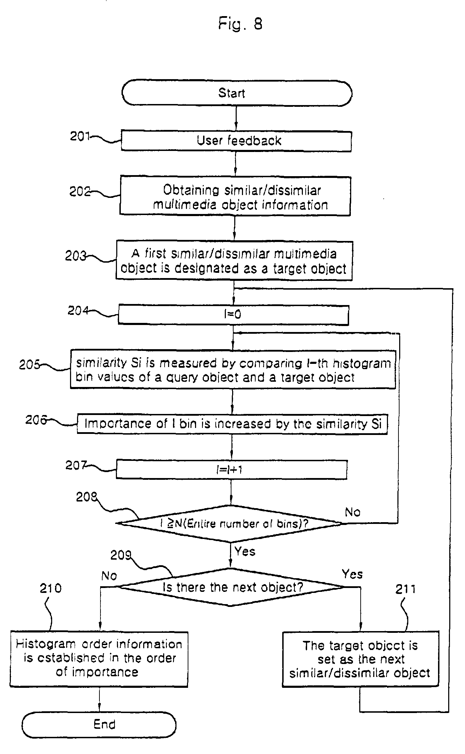

Fig. 8 illustrates an order of obtaining reorder information of a histogram using a user feedback so that retrieval performance is not so lowered even if only parts of the histogram are used. In this method, information about similar objects of the objects to be reordered are received from the user feedback, and thereafter the similarity between similar objects and the corresponding bin is measured for each bin of the histogram. In proportion to the similarity thusly calculated, the importance of each bins is increased. Then, when the importance of every bins is calculated for every similar objects, the reorder information of those bins are calculated in the order of importance of every bins.

Fig. 8 will be explained in detail. Step 201 is a step for receiving a feedback (information about similarity or dissimilarity) for the result of initial retrieval from a user. Step 202 is a step for obtaining similar/dissimilar multimedia object information according to the user feedback. In step 203, a first similar/dissimilar multimedia object is designated as a target object. In step 204, I bin is set as 0. In step 205, similarity Si is measured by comparing I-th histogram bin values of a query object and a target object. In step 206, the importance of I bin is increased by the similarity Si. A series of steps for measuring the similarity and increasing the importance of I bin by the measured similarity are repeated until I reaches the total number of bins in steps 207 and 208. In this way, the generation of the importance of I bin for the corresponding object is completed. Then, if there is no next object, histogram order information is established in the above order of importance in steps 209 and 210. If there is the next object, the target object is set as the next similar/dissimilar object, and the steps for measuring the similarity Si and generating the importance are repeated by beginning with I bin = 0 in steps 209 and 211.

Next, a method for using grouping information will be explained. For more effective multimedia retrieval, grouping information of other multimedia objects in the same class can be included for each multimedia object. On the other hand, multimedia objects in a particular database can be grouped by class. In this manner, if there is information about groups of the same class, the importance of each bin can be automatically calculated by using this information. That is, multimedia objects in the same class are identical to the feedback information about similar objects from the above-described user feedback. Thus, the importance of a bin can be calculated by applying the above-described importance wi calculation method to the histogram of these objects in the same way.

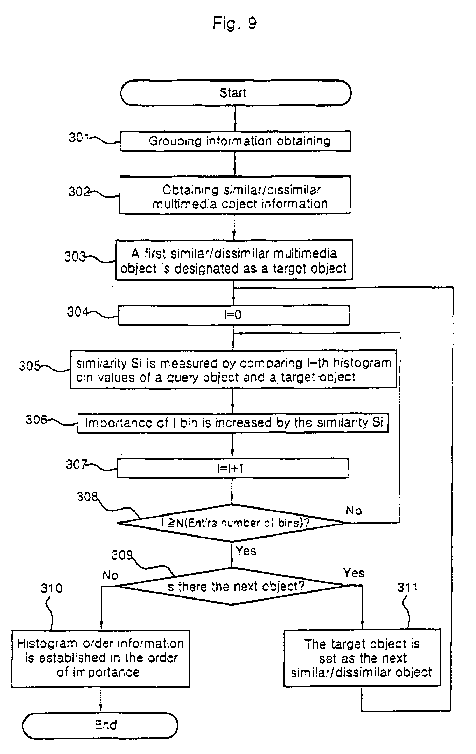

Fig. 9 illustrates an order of a method for using grouping information in place of a user feedback as another method for obtaining reorder information of a histogram. In this method, information about similar objects of the object to be reordered is received from group information previously configured in step 301. The subsequent steps are identical to the ones of the method described in Fig. 8. That is, information about similar objects of the object to be reordered are received from group information previously configures, and then similar/dissimilar object information are obtained in step 302. A first similar/dissimilar multimedia object is designated as a target object in step 303. The similarity between bins of the histogram I=0 through N is measured and then the importance of the corresponding I bin is increased by the similarity Si in steps 304 through 308. If there is no next object, histogram order information is established in the above order of importance in steps 309 and 310. If there is the next object, the steps are repeated starting from 304 in steps 309 and 311.

In order to compare and retrieve the produced histogram, as described above, order information representing that the bin is reordered on what importance and on what order is required. For example, calculation of similarities of two images will be described by using histogram. In this case, since the order of two histograms is differ, bin order information is required as feature information of the histogram in order to compare among the bins, in which a mapping is performed. Even though the order of the histogram is differ, it is possible to compare among the reordered bins according to any importance.

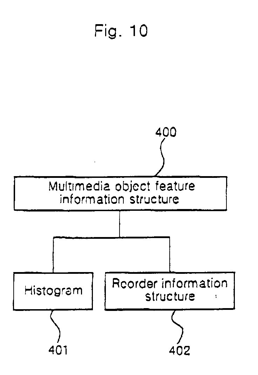

Figure 10 illustrates a feature information structure of a multimedia object formed of histogram and reorder information. A feature information structure 400 has a histogram information 401 as feature information of the multimedia and a reorder information structure 402 representing that the order of each bin of the histogram is arranged on what importance. In here, the reorder information is a one dimensional matrix type in which the order of each bin of the histogram is arranged.

According to the present invention, in the multimedia retrieving using a histogram, it is possible to perform the high retrieving capacity even though the partial histogram is compared and retrieved. Especially, when the data transfer is interrupted in transferring the histogram of data, high retrieving capacity is guaranteed even though only the received part is retrieved.

Also, according to the present invention, there is an advantage that a server having data discriminates whether the histogram is transmitted partially or wholly according to an object of retrieval and the environment of a client and a network, thereby capable of performing an optimum retrieval at every case. Also, according to the present invention, there is an effect that a progressive histogram optimized according to the feature of every object is used, so that a high retrieval capacity is possible even though the comparison and retrieval are performed by using a partial histogram. Especially, according to the present invention, a different feature on each object is considered to the reorder information, thereby providing a very high capacity and an object-oriented retrieving service.

While the invention has been shown and described with reference to certain preferred. embodiments thereof, it will be understood by those skilled in the art that various changes in form and details may be made therein without departing from the spirit and scope of the invention as defined by the appended claims.

## Claims

1. A histogram in which a relatively important bin comes at the lead of the access on the basis of the access order of time series grounds in order to retrieve multimedia using the histogram.

2. The histogram according to claim 1, wherein the histogram is a color histogram.

3. A progressive multimedia retrieval method comprising the steps of;
reconfiguring a histogram that a relatively important bin comes at the lead of the access when accessing histogram data for retrieving; and
comparing/retrieving a query histogram and a retrieval target histogram according to the order of importance of bins, when accessing and then comparing/retrieving the histogram reconfigured as the order of importance, the access order reconfigured as the order of importance.

4. The progressive multimedia retrieval method in accordance with claim 3, wherein the progressive part that comes at the lead represents the whole corresponding histogram. when the histogram reconfigured in the order of importance is being accessed to perform comparison and retrieval of the query histogram and the retrieval of a target histogram.

5. The progressive multimedia retrieval method in accordance with claim 3 or 4, wherein the reconfiguration of the histogram in the order of importance of bins is considered that bins having a larger variance are more important bin by means of calculation based on the variance of bin values for each bin calculated from a sample group.

6. The progressive multimedia retrieval method in accordance with one of claims 3-5, wherein the reconfiguration of the histogram in the order of importance of bins is considered that bins having a smaller variance in its group but having a larger variance between other groups are more important bins by means of calculation of the variance of each bin in its group and the variance of each bin between other groups from the sample group which is classified into groups by similarity of images.

7. The progressive multimedia retrieval method in accordance with one of claims 3-6, wherein the reconfiguration of the histogram in the order of importance of bins is configured by sampling bins meaning the segmental regions segmented by quantization of a color space in which a segmental region having a low fineness is selected with high probability and appeared in the front part of the histogram.

8. The progressive multimedia retrieval method in accordance with claim 6 or 7, wherein, when the histogram uses a color space of HMMD configured by Hue, SUM(MAX(RGB)+MIN(RGB)), DIFF(MAX(RGB)-MIN(RGB)) and the HMMD color space has the range of DIFF values of 0∼255 and the designated DIFF values for segmenting on the basis of the shaft of DIFF are 9,29,75,200 and the five segmental regions segmented on the basis of the DIFF values are S1,S2,S3,S4 and S5,respectively, the five segmental regions are configured as 184 bins by using a color quantization method in which S1 is segmented by 8 on the basis of SUM, S2 is segmented by 4 on the basis of SUM and by 8 on the basis of Hue, S3 is segmented by 4 on the basis of SUM and by 12 on the basis of Hue, S4 is segmented by 4 on the basis of SUM and by 12 on the basis of Hue, and S5 is segmented by 2 on the basis of SUM and by 24 on the basis of Hue.

9. The progressive multimedia retrieval method in accordance with claim 8, wherein the sampling probabilities at the regions of S1,S2,S3,S4 and S5, respectively, are decided on 24:12:6:2:1 in order to make the sampling probabilities differ.

10. The progressive multimedia retrieval method in accordance with one of claims 3-9, wherein, in the multimedia retrieval system using the progressive histogram, the method further comprises the step of:
transferring the histogram to a client or retrieving the histogram by using the histogram in part or whole from the front part of the histogram according to a retrieval object and a hardware environment of the client for the retrieval.

11. The progressive multimedia retrieval method in accordance with one of claims 3-10, wherein, in the multimedia retrieval system using the progressive histogram, the method further comprises retrieving by only using the received histogram data, when the histogram data of the query data is interrupted by unexpected results in transfer.

12. The progressive multimedia retrieval method in accordance with one of claims 3-11, wherein the histogram is a color histogram.

13. A histogram information representation structure comprising: bin order information deciding an order that a relatively important bin comes at the lead of the access in the access order of time series grounds in order to query using the histogram.

14. The progressive multimedia retrieval method in accordance with claim 13, wherein the histogram is a color histogram.

15. A multimedia retrieval method using a progressive histogram comprising the steps of:
producing bin order information deciding an access order that a relatively important bin comes at the lead of the access when accessing histogram data for retrieving in the multimedia retrieval using the progressive histogram;
retrieving partial bin of the histogram by using the bin order information; and
comparing/retrieving the histogram by selecting the bin according to the order of importance of bins.

16. The progressive multimedia retrieval method in accordance with claim 15, wherein the histogram is a color histogram.

17. The multimedia retrieval method using a progressive histogram in accordance with claim 15 or 16, wherein, in the multimedia retrieval system using the progressive histogram, the method further comprises transferring the histogram to a client or retrieving the histogram by using the histogram in part or whole from the front part of the histogram according to a retrieval object and a hardware environment of the client for the retrieval.

18. The multimedia retrieval method using a progressive histogram in accordance with one of claims 15-17, wherein, in the multimedia retrieval system using the progressive histogram, the method further comprises the steps of:
reconfiguring a query histogram and a retrieval target histogram according to the respective bin order information; and
comparing/retrieving the histogram reconfigured that an important bin comes at the lead according to the bin order information.

19. The multimedia retrieval method using a progressive histogram in accordance with one of claims 15-18, wherein, in the multimedia retrieval system using the progressive histogram, the method further-comprises the steps of:
selecting a query histogram and a retrieval target histogram one by one according to the bin order information; and
comparing/retrieving the histogram according to the bin order.

20. A multimedia retrieval method using a progressive histogram comprising the steps of:
calculating importance of bins configuring the corresponding histogram in each multimedia object, in which the importance is differ according to the viewpoints of comparing/retrieving, when calculating the importance of bins configuring histogram as feature information for retrieving multimedia; and
comparing/retrieving the histogram according to the order of importance by using the calculated information of importance according to the viewpoints of comparing/retrieving.

21. The multimedia retrieval method using a progressive histogram in accordance with claim 20, the method further comprises the step of:
calculating the information of importance of bins according to the viewpoints of comparing/retrieving on the basis of user's feedback information to similarity or dissimilarity or on the basis of group information to a similarity object obtained in advance.

22. The multimedia retrieval method using a progressive histogram in accordance with claim 20 or 21, wherein the histogram is transmitted by the order of importance of bins and the partial histogram or the whole histogram is transmitted according to the situation of a system or a network.

23. The multimedia retrieval method using a progressive histogram in accordance with claim 20 or 21, wherein the histogram is a color histogram.

24. A method for configuring progressive histogram information comprising the steps of:
producing importance of bins configuring the histogram as feature information for retrieving multimedia by considering the feature according to the viewpoints of comparing/retrieving, in which the importance is differ in each multimedia object; and
producing and storing the order information of bin of the histogram.

25. The method for configuring progressive histogram information in accordance with claim 24, wherein the order information of bin of the histogram is a one-dimensional matrix type arranged the order of each bin of histogram.

26. The method for configuring progressive histogram information in accordance with claim 24, wherein the histogram is a color histogram.
